# EUROPEAN PATENT SPECIFICATION

(11) **EP 3 702 012 B1**
(45) Date of publication and mention of the grant of the patent: **28.07.2021**
(21) Application number: 18871628.6
(22) Date of filing: 10.10.2018
(51) Int. Cl.: B01D 29/64, B01D 29/35, B01D 35/153, B01D 35/16

(54) **SELF-CLEANING FILTER**
SELBSTREINIGENDER FILTER
FILTRE AUTONETTOYANT

(30) Priority: 27.10.2017 ES 201731305 U
(43) Date of publication of application: 02.09.2020
(73) Proprietor: Fluytec, S.A., 48950 Erandio (Vizcaya) (ES)
(72) Inventor: OTEGUI MARTÍNEZ, Pedro, 48180 Loiu (Vizcaya) (ES); MESA CUEVAS, Unai, 48950 Erandio (Vizcaya) (ES)
(74) Representative: Ungria López, Javier
(86) International application number: PCT/ES2018/070660
(87) International publication number: WO 2019/081790

(56) References cited:
- WO-A1-99/33542
- WO-A1-99/33542
- CN-A- 105 879 456
- FR-A1- 2 578 441
- FR-A1- 2 578 441
- GB-A- 1 485 989
- GB-A- 1 485 989
- US-A1- 2013 306 546

## Description

### OBJECT OF THE INVENTION

The present invention relates to a self-cleaning filter that enables the cleaning of the filter itself without the incorporation of external or additional elements into the filter itself and without stopping the filtering process.

It has a particular application in the industrial field relating to the manufacture of filters.

### TECHNICAL PROBLEM TO BE RESOLVED AND BACKGROUND OF THE

### INVENTION

Filters are devices intended to retain the dirt of the current of fluid in which it is located, whether it is air or liquid. Due to their own functionality, they require periodic cleaning so that they do not become blocked and continue to operate in a controlled manner, since if the filter becomes dirty, the pressure necessary to make water pass through the filtering means increases, until the filter is completely blocked.

In order to prevent the filter removal process, with the resulting problems due to stopping the production, there are a variety of self-cleaning filters that are known in the current state of the art. These filters incorporate a device intended to clean the filter itself without requiring the removal thereof.

In a first type of these self-cleaning filters, cleaning is carried out by means of rotation, actuated by a motor, of a plunger tube that aspirates the inside of the filtering elements (strainers). Due to this suction, the dirt incrusted in the walls of the filtering elements is eliminated. The suction is produced by the drop in pressure, which makes the water flow through the arm to the outlets of the valve in the lowest portion of the equipment. This cleaning system does not have axial movement, only rotational.

In a second type of these self-cleaning filters, cleaning is carried out by means of circular nozzles that aspirate the dirt incrusted in the walls of the filter. These nozzles are joined to a shaft which must be externally actuated by a motor so that the shaft moves longitudinally. The rotation is caused by the drop in pressure, which makes the water flow through the arm of the shaft to the opposing outlets of the arms in the rear portion of the shaft.

In a third type of these self-cleaning filters, cleaning is carried out by means of circular nozzles that aspirate the dirt incrusted in the walls of the filter. These nozzles are joined to a shaft which must be externally actuated by a motor so that it moves longitudinally.

The rotation is caused by the drop in pressure, which makes the water flow through the arm of the shaft to the opposing outlets of the arms in the rear portion of the shaft.

In a fourth type of these self-cleaning filters, the cleaning is carried out similarly to the preceding type; circular nozzles that aspirate the dirt incrusted in the walls of the filter are joined to a shaft which is actuated by a single motor. This motor is responsible for providing the shaft with longitudinal movement. In this last case, the rotation is self-actuated, that is, it rotates due to the injectors that carry out the jet propulsion and, due to the action and reaction effect, the cleaning system rotates.

A similar filter is disclosed in FR 2578441.

However, all these self-cleaning filters have a series of drawbacks, such as:
- Maintenance of the motor.
- Maintenance due to wear of the mobile parts.
- Greater loss of water to ensure 100% cleanliness of the mesh.

In this way, although the self-cleaning filters have been used for decades, this technology still presents a series of aspects to be improved and even resolved, such as:
- Operation without the use of a motor to make the rotor rotate.
- Operation without the use of a motor for the horizontal translation movement and the piston, reducing the maintenance and cost.
- The fact that the aspiration mouths do not pass over 100% of the surface of the strainer, or pass over only once.
- The high water loss during washing.

The present invention resolves these problems that are not resolved in the current state of the art, by means of a self-cleaning filter that does not need to be activated by any external element and where the water loss for cleaning is reduced to a minimum.

The invention is aligned with the technological filtering solution where several cartridges are introduced in the same pressurised container.

The invention provides the state of the art with the integration of a self-cleaning system without the presence of motors or external elements. This integration provides the following advantages:
- it ensures that the aspiration mouths pass over 100% of the surface of the filtering element and, also, repetitively, during cleaning. It must be noted that current devices cannot ensure the sweeping of 100% of the area since it depends on the ratio between translation and rotation speeds. Moreover, they only pass over once, so the washing has worse performance.
- Water loss during washing is negligible, less than 5 m³/h in the majority of cases,
- The floor area (footprint) and the number of pre-treatment elements (fewer bodies, fewer valves, fewer control elements, etc.) is reduced,
- Maintenance times of the equipment are reduced given that the number of objects susceptible to maintenance are significantly reduced. Stopped equipment always entails losses for the plant.
- Load loss of the system is reduced as accessories are removed, which improves the energy efficiency of the plant.
- Noise, pollution and electricity consumption are reduced since there is no motor to carry out the cleaning of the equipment.
- Elements are used that enable continuous production while the autonomous cleaning of the filter is carried out, without the need to stop production, resulting in the elimination of losses for the plant.

### DESCRIPTION OF THE INVENTION

The invention consists of a self-cleaning filter according to claim 1 with a cleaning system that does not need the use of external elements such as electric motors, turbines, pulleys and other accessories to rotate the shaft.

It is a system that is self-actuated by hydraulic propulsion that enables cleaning to be carried out while the equipment is filtering, without having to stop production. To do so, there is a minor drawback, which is that when the cleaning takes place, a minimal amount of the supply flow is sent to drainage.

The self-cleaning filter of the invention is cylinder shaped. It is formed by an outer casing, an inlet cover and an outlet cover. It comprises a liquid inlet mouth with a valve V1 and a liquid outlet mouth with a valve V2, both located in the outer casing, and a drainage outlet with a valve V3 that passes through the outlet cover.

There are three chambers inside the filter of the invention:
- a supply chamber, which is coaxial with the outer casing, configured by means of a filtering element by way of a cylindrical surface that is joined at the ends to an inlet disc and to an outlet disc by way of bases,
- a drainage chamber that is joined to the supply chamber at one end and to a drainage outlet at the other end, and
- a filtration chamber, surrounding the supply chamber and the drainage chamber and limited by the outer casing, the inlet disc and the outlet disc.

A cleaning brush, configured by means of a tube and blades, is housed inside the supply chamber. The tube is fastened at each end, with the ability to rotate, to the inlet disc and to the outlet disc. At least two blades are tangentially joined to the tube which are radially distributed in a balanced manner along the length of the tube, with the ends ending with bristles. The dimensions of the blades are such that they longitudinally occupy the entire length of the tube and, radially, the bristles are in contact with the filtering element. Both the blades and the tube are hollow and are hydraulically communicated.

The end of the tube that is located on the outlet disc extends by means of a shaft that does not plug it and ends in a rotor. Both the shaft and the rotor are located in the drainage chamber.

The operation of the filtering phase is as indicated below. When the valves V1 and V2 are open, the water accesses the filter through the inlet mouths to the supply chamber and moves to the filtration chamber by passing through the filtering element in order to exit the filter through the outlet mouths.

The operation of the cleaning phase is the following. When valves V1 and V2 are open, upon opening valve V3, the drainage chamber suctions a portion of the fluid of the filtration chamber, which passes through the filtering element and, through the blades, passes through the tube to move to the drainage chamber, activating the rotor and causing the blades to sweep the inner surface of the filtering element. Furthermore, in order to improve the effectiveness of the movement of the cleaning brush, a disc with nozzles is placed between the outlet disc and the rotor, the nozzles which direct the water jet coming from the tube towards the surface of the vanes of the rotor. The sweeping of the inner surface of the filtering element by the blades and the suction created cause the dirt elements to be detached, which circulate through the tube to move through the drainage outlet to a tank or catch basin.

### BRIEF DESCRIPTION OF THE FIGURES

To complete the description of the invention, and for the purpose of helping to make the characteristics thereof more readily understandable, according to a preferred exemplary embodiment thereof, a set of drawings is included where, by way of illustration and not limitation, the following figures have been represented:
- Figure 1 shows a side view of the self-cleaning filter of the invention.
- Figure 2 shows a longitudinal cross-sectional view of the filter of figure 1.
- Figure 3 shows an enlargement of the outlet area of the filter shown in figure 2.
- Figure 4 shows a perspective view of the cleaning brush.
- Figure 5 shows a front view of the cleaning brush showing the direction of movement of the blades.
- Figure 6 shows a cross-sectional perspective view of the cleaning brush showing the direction of the fluid during the cleaning process.

A list of the references used in the figures is provided below:
1. Outer casing.
2. Supply chamber.
3. Filtration chamber.
4. Drainage chamber.
5. Filtering element.
6. Tube.
7. Blades.
8. Inlet disc.
9. Outlet disc.
10. Rotor.
11. Inlet mouth.
12. Outlet mouth.
13. Drainage outlet.
14. Projection.
15. Shaft.
16. Inlet cover.
17. Outlet cover.
18. Nozzles.

### DESCRIPTION OF A PREFERRED EMBODIMENT OF THE INVENTION

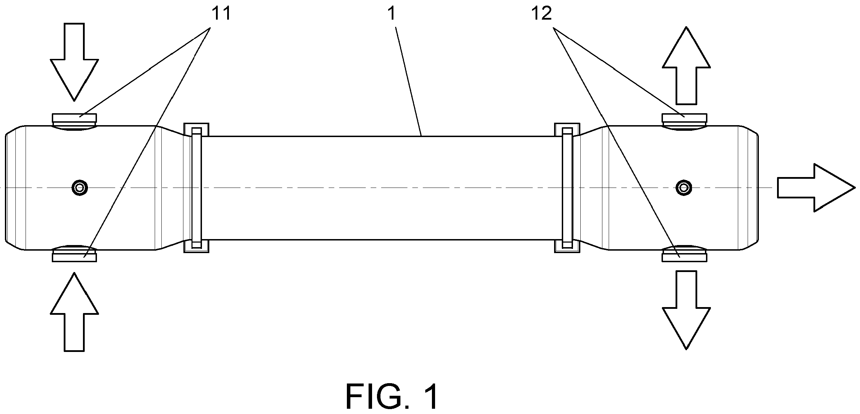

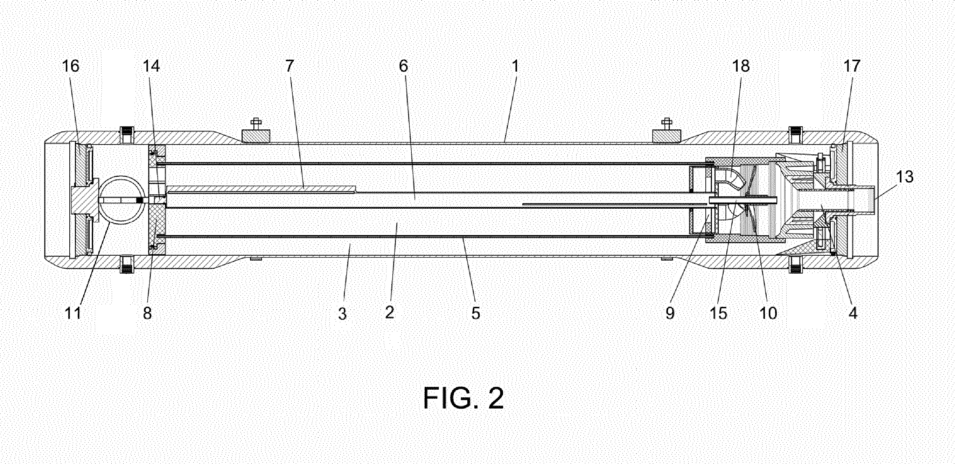

Pursuant to the numbering used in the figures, as shown in figures 1 and 2, the self-cleaning filter of the invention has a cylindrical configuration by means of an outer casing (1) and axial closures configured by means of an inlet cover (16) and an outlet cover (17). The filter of the invention incorporates inlet mouths (11) by means of which the water to be filtered accesses the inside of the filter, outlet mouths (12) by means of which the filtered water exits the filter and a drainage outlet (13), which passes through the outlet cover (17), for the storage of the dirt of the filter. There are three areas inside the filter that are clearly differentiated depending on the filtration status of the fluid. These areas are the supply chamber (2), filtration chamber (3) and drainage chamber (4).

The supply chamber (2) is located coaxially with the outer casing (1), that is, longitudinally centred in the filter. It is configured in a cylinder shape by means of a filtering element (5) that forms the cylindrical wall that, at one end, rests on an inlet disc (8), configured for the access of water from the inlet mouths (11), and, at the other end, rests on an outlet disc (9) that prevents the passage of water. The inlet disc (8) is fastened to the casing (1) and has a hole with the same diameter as the filtering element (5), being closed from the filtering element (5) to the outer casing (1). The end of the filtering element (5) comprises radial reinforcements that extend towards the inside of the hole, ending in a circular structure concentric with the filtering element (5). As for the outlet disc (9), it comprises a hole that is also concentric with the filtering element (5).

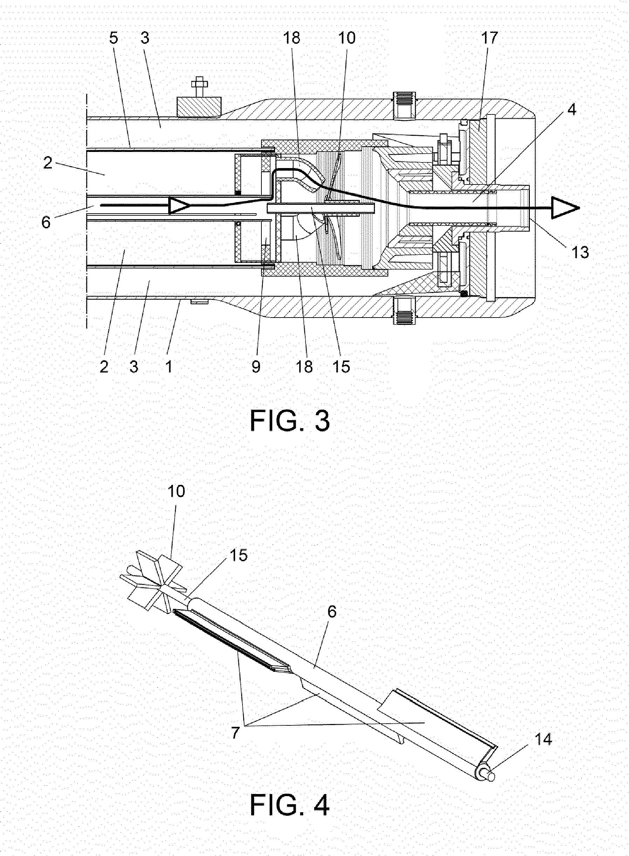

A cleaning brush is coaxially located inside the supply chamber (2), which is configured by means of a tube (6) comprising three blades (7) that cover the entire length of the tube (6), each blade (7) being displaced 120 degrees with the contiguous blade (7) such that they have radial symmetry with respect to the tube (6). The blades (7) project tangentially from the tube (6), reaching the vicinity of the filtering element (5), thus coming into contact by means of bristles, not shown in the figures, that the ends of the blades (7) incorporate. Despite the contact of the bristles, the relative rotation movement is not affected. Both the tube (6) and the blades (7) are hollow and are in communication. Moreover, one end of the tube (6) is closed and ends in a projection (14), while the other end of the tube (6) is open and extends by means of a shaft (15) that ends in a rotor (10). In this way, a fluid is enabled to circulate between the blades (7) and this end along the tube (6). Figure 4 shows the cleaning brush, showing these elements.

The number of blades (7) has been selected in threes to compromise between production costs and efficiency, such that there may be more blades (7), in this case being displaced a number of degrees resulting from dividing the 360 degree of a complete circle by the number of blades (7).

In order to fix the tube (6) inside the supply chamber (2), the projection (14) is fixed in the circular structure of the inlet disc (8) while the tube itself (6) passes through the hole of the outlet disc (9). The joins of the tube (6) with the discs (8, 9) provide the tube (6) with the ability to rotate. This ability to rotate is necessary so that the blades (7) act on the entire inner surface of the filtering element (5), which is where the solids retained in the filtering process accumulate, causing a complete cleaning of the filtering element (5). The symmetrical arrangement of the blades (7) means that the weight is balanced and the rotation of the tube (6) is caused more easily. The joins between the projection (14) and the tube (6) with inlet (8) and outlet (9) discs incorporate common elements of the state of the art to facilitate both relative movement and leak-tightness.

Figure 3 shows an enlargement of the area of the filter corresponding to the drainage chamber (4). The drainage chamber (4) is configured in the shape of a cylindrical tube that is joined at one of the ends thereof to the outlet disc (9) of the supply chamber (2), being axially closed, with the exception of the hole through which the tube (6) passes, the shaft (15) and the rotor (10) being in the drainage chamber (4). The join of the drainage chamber (4) with the supply chamber (2) is carried out by means of a flap element that incorporates elements for fastening to the casing (1). The other end of the drainage chamber (4) incorporates a drainage outlet (13) that passes through the outlet cover (17) and communicates with a tank for storing dirt.

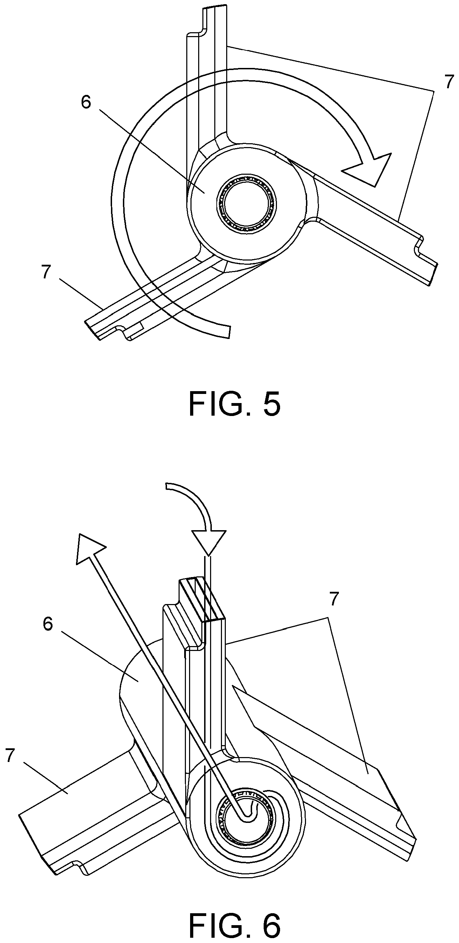

The drainage chamber (4) is located adjacent to the supply chamber (2) from where one of the ends of the tube (6) extends to enter the drainage chamber (4) by means of the shaft (15), ending in a rotor (10). In this way, when the water passes from the supply chamber (2), through the blades (7) and the tube (6), to the drainage chamber (4) it meets the rotor (10), making it rotate and causing the rotation of the tube (6), as shown in figure 5 and, as a result, the sweeping movement of the blades (7) along the filtering element (5). The circulation movement of the water along the blades (7) and the tube (6) is shown in figure 6.

The operation of the rotor (10) can be improved by inserting, between the outlet disc (9) and the rotor (10), a disc that, on the side of the outlet disc (9), has openings and, on the side of the rotor (10), has nozzles (18) that point towards the vanes of the rotor (10). In this way, the fluid is forced to move from the outlet of the tube (6) towards the nozzles (18) and thus hit more directionally on the vanes of the rotor (10).

Alternatively, the outlet disc (9) comprises holes joined to nozzles (18) which are radially distributed and directed towards the surface of vanes of the rotor (10).

The filtration chamber (3) is delimited by the outer surface of the filtering element (5), and of the casing of the drainage chamber (4), the inner surface of the casing (1), the inlet disc (8) and the outlet cover (17), having direct access to the outlet mouths (12) of the filter. In this way, it surrounds the supply chamber (2), separated from the same by means of the filtering element (5), and the drainage chamber (4). The filtration chamber (3) contains the water that has passed through the filtering element (5) and no longer contains solid particles greater than the micronage of the sieve of the filtering element (5).

In addition to the elements described, the filter has a series of valves that control the operation that, although they have not been shown in the figures, have been referred to as V1, V2 and V3 for greater ease when writing the description. In this way, each of the inlet mouths (11) incorporates a valve V1, each outlet mouth incorporates a valve V2, and the drainage outlet (13) of the drainage chamber (4) incorporates a valve V3.

In general, the operation of the filter of the invention can be broken down into the following phases:
1) Filtration.

During the filtration process, the valves V1 and V2 remain open, while the valve V3 remains closed. In this way, the water enters the supply chamber (2) of the filter through the valves V1 of the inlet mouths (11) and, as the valve V3 of the drainage outlet (13) is closed, it is forced to pass through the filtering element (5) from the inside to the outside in order to access the filtration chamber (3). The solids in suspension with a size greater than the value predetermined by the sieve of the filtering element (5) are retained on the inner surface of the filtering element (5), while the rest accesses the filtration chamber (3) with the flow of water to subsequently exit to the outside of the filter through the outlet mouths (12) through the valves V2. The sieve tends to be selected between 100 and 500 micron. 2) Backwashing.

The backwashing process entails cleaning the filtering element (5). This process is activated upon determining that there is a specific pressure difference between the supply chamber (2) and the filtration chamber (3). This specific value corresponds to a level of dirt which is considered critical which makes it necessary to clean the filtering element (5). In the exemplary embodiment, it is manually determined by means of adjusting a differential manometer. In order to activate the backwashing process, the valves V1 and V2 being open, valve V3 of the drainage outlet (13) is opened, then activating the hydraulic communication of the supply chamber (2), through the tube (6), with the drainage chamber (4) and generating suction of the supply chamber (2) from the drainage chamber (4). The suction is generated due to the fact that the pressure outside the valve V3, in the drainage chamber (4), is atmospheric pressure, while the supply chamber (2) and, therefore, the tube (6), with water circulation, is at values usually greater than 3 bars.

The suction from the supply chamber (2) to the drainage chamber (4) is produced through the inside of the tube (6), which suctions, through the cavities inside the three blades (7), the dirt accumulated on the inner face of the filtering element (5). The cleaning of the filter is carried out by means of two systems. Firstly, the bristles of the suction blades (7) brush the surface of the filtering element (5) to detach the solids adhered to the inner wall. Secondly, the three hollow blades (7) suction the solid particles that have been previously detached through the tube (6), due to the effect of the pressure difference with the outside.

The scope of the invention is defined by the following claims.

## Claims

1. A self-cleaning filter with a cylindrical configuration comprising an outer casing (1) by way of cylindrical surface, an inlet cover (16) and an outlet cover (17) by way of bases, a liquid inlet mouth (11) with a valve V1, a liquid outlet mouth (12) with a valve V2 and a drainage outlet (13) with a valve V3, the filter comprising:
- a supply chamber (2), which is coaxial with the cylindrical-shaped outer casing (1), configured by means of a filtering element (5) by way of a cylindrical surface that is joined to an inlet disc (8) and to an outlet disc (9) by way of bases,
- a drainage chamber (4) that is joined to the supply chamber (2) at one end and to a drainage outlet (13) at the other end,
- a filtration chamber (3), delimited between the outer casing (1), the supply chamber (2) and drainage chamber (4), the inlet disc (8) and the outlet cover (17),
wherein,
- the supply chamber (2) houses a cleaning brush that comprises a tube (6) that is fixed, with the ability to rotate, to the inlet disc (8) and to the outlet disc (9), at least two blades (7) extending tangentially from the tube (6), with the ends ending with bristles, having dimensions such that they longitudinally occupy the entire length of the tube (6) and, radially, the bristles are in contact with the filtering element (5), the blades (7) being radially distributed in a balanced manner, and both the blades (7) and tube (6) being hollow and hydraulically communicated,
- the drainage chamber houses a shaft (15), joined to, and without plugging, the end of the tube (6), the shaft (15) ending in a rotor (10)
such that:
- when the valves V1 and V2 are open, the water enters into the supply chamber (2) and moves to the filtering chamber (3) passing through the filtering element (5), and
- when the valves V1, V2 and V3 are open, the drainage chamber (4) suctions the fluid of the filtration chamber (3), which passes through the filtering element (5) and, through the blades (7), passes through the tube (6) to move to the drainage chamber (4), activating the rotor (10) and making the blades (7) sweep the inner surface of the filtering element (5) the filter being **characterized in that** the outlet disc (9) comprises holes joined to nozzles (18) which are radially distributed and directed towards the surface of vanes of the rotor (10).

2. The self-cleaning filter according to claim 1, **characterized in that** the cleaning brush comprises three blades (7) distributed radially with a separation of 120 degrees.

3. The self-cleaning filter according to claim 1, **characterized in that** the total length of the blades (7) is greater than the length of the tube (6), the blades (7) overlapping slightly, such that it is ensured that they access the entire surface of the filtering element (5).

4. The self-cleaning filter according to any of claims 1 or 2, **characterized in that** between the outlet disc (9) and the rotor (10), the drainage chamber (4) is blocked by a disc with holes joined to nozzles (18) directed towards vanes of the rotor (10) through which the fluid is forced to move.

## Patentansprüche

1. Selbstreinigender Filter mit einer zylindrischen Form, der ein Außengehäuse (1) als zylindrische Oberfläche, eine Einlass-Abdeckung (16) sowie eine Auslass-Abdeckung (17) als Grundflächen, eine Flüssigkeits-Einlassöffnung (11) mit einem Ventil V1, eine Flüssigkeits-Auslassöffnung (12) mit einem Ventil V2 und einen Ableit-Auslass (13) mit einem Ventil V3 umfasst, wobei der Filter umfasst:
- eine Zuleit-Kammer (2), die koaxial zu dem zylindrisch geformten Außengehäuse (1) ist und über ein Filterelement (5) als eine zylindrische Fläche ausgebildet ist, die über Grundflächen mit einer Einlass-Scheibe (8) und einer Auslass-Scheibe (9) verbunden ist,
- eine Ableit-Kammer (4), die an einem Ende mit der Zuleit-Kammer (2) und an dem anderen Ende mit einem Ableit-Auslass (13) verbunden ist,
- eine Filtrier-Kammer (3), die von dem Außengehäuse (1), der Zuleit-Kammer (2) und der Ableit-Kammer (4), der Einlass-Scheibe (8) und der Auslass-Abdeckung (17) begrenzt wird,
wobei
- die Zuleit-Kammer (2) eine Reinigungsbürste aufnimmt, die ein Rohr (6), das drehbar an der Einlass-Scheibe (8) und an der Auslass-Scheibe (9) befestigt ist, sowie wenigstens zwei Schaufeln (7) umfasst, die sich tangential von dem Rohr (6) aus erstrecken, deren Enden mit Borsten enden, und die so bemessen sind, dass sie in Längsrichtung die gesamte Länge des Rohrs (6) einnehmen und die Borsten radial in Kontakt mit dem Filterelement (5) sind, wobei die Schaufeln (7) radial gleichmäßig verteilt sind und sowohl die Schaufeln (7) als auch das Rohr (6) hohl sind und hydraulisch in Verbindung stehen,
- die Ableit-Kammer eine Welle (15) aufnimmt, die mit dem Ende des Rohrs (6) verbunden ist es jedoch nicht verschließt, wobei die Welle (15) in einem Rotor (10) endet,
so dass:
- wenn die Ventile V1 und V2 geöffnet sind, das Wasser in die Zuleit-Kammer (2) eintritt und sich, durch das Filterelement (5) hindurchtretend, zu der Filter-Kammer (3) bewegt, und
- wenn die Ventile V1, V2 und V3 geöffnet sind, die Ableit-Kammer (4) die Flüssigkeit der Filtrier-Kammer (3) ansaugt, die durch das Filterelement (5) hindurch und über die Schaufeln (7) gelangt, durch das Rohr (6) hindurchtritt und sich zu der Ableit-Kammer (4) bewegt, den Rotor (10) aktiviert und bewirkt, dass die Schaufeln (7) die Innenfläche des Filterelementes (5) überstreichen, wobei der Filter **dadurch gekennzeichnet ist, dass** die Auslass-Scheibe (9) Löcher umfasst, die mit Düsen (18) verbunden sind, die radial verteilt und auf die Oberfläche von Flügeln des Rotors (10) zu gerichtet sind.

2. Selbstreinigender Filter nach Anspruch 1, **dadurch gekennzeichnet, dass** die Reinigungsbürste drei Schaufeln (7) umfasst, die radial mit einem Abstand von 120° verteilt sind.

3. Selbstreinigender Filter nach Anspruch 1, **dadurch gekennzeichnet, dass** die Gesamtlänge der Schaufeln (7) größer ist als die Länge des Rohrs (6), wobei sich die Schaufeln (7) geringfügig überlappen, so dass gewährleistet ist, dass sie die gesamte Oberfläche des Filterelementes (5) erreichen.

4. Selbstreinigender Filter nach einem der Ansprüche 1 oder 2, **dadurch gekennzeichnet, dass** zwischen der Auslass-Scheibe (9) und dem Rotor (10) die Ableit-Kammer (4) durch eine Scheibe mit Löchern abgesperrt wird, die mit Düsen (18) verbunden sind, die auf Flügel des Rotors (10) zu gerichtet sind, durch die das Fluid zwangsweise bewegt wird.

## Revendications

1. Filtre auto-nettoyant avec une configuration cylindrique comprenant un boîtier externe (1) en forme de surface cylindrique, une couverture d'entrée (16) et une couverture de sortie (17) en forme de bases, une embouchure d'entrée de liquide (11) avec une valve V1, une embouchure de sortie de liquide (12) avec une valve V2 et une sortie de drainage (13) avec une valve V3, le filtre comprenant :
- une chambre d'alimentation (2), qui est coaxiale avec le boîtier externe en forme de cylindre (1), configurée au moyen d'un élément de filtration (5) en forme d'une surface cylindrique qui est jointe à un disque d'entrée (8) et un disque de sortie (9) en forme de bases,
- une chambre de drainage (4) qui est jointe à la chambre d'alimentation (2) à une extrémité et à une sortie de drainage (13) à l'autre extrémité,
- une chambre de filtration (3), délimitée entre le boîtier externe (1), les chambres d'alimentation (2) et chambre de drainage (4), le disque d'entrée (8) et la couverture de sortie (17),
dans lequel,
- la chambre d'alimentation (2) loge une brosse nettoyante qui comprend un tube (6) qui est fixé, avec l'aptitude à tourner, au disque d'entrée (8) et au disque de sortie (9), au moins deux pales (7) s'étendant tangentiellement à partir du tube (6), avec les extrémités se terminant avec des soies, ayant des dimensions telles qu'elles occupent longitudinalement la longueur entière du tube (6) et, radialement, les soies sont en contact avec l'élément de filtration (5), les pales (7) étant radialement distribuées dans une manière équilibrée, et à la fois les pales (7) et le tube (6) étant creux et en communication hydraulique,
- la chambre de drainage loge un arbre (15), joint à, et sans colmatage, l'extrémité du tube (6), l'arbre (15) se terminant dans un rotor (10)
de sorte que :
- lorsque les valves V1 et V2 sont ouvertes, l'eau entre dans la chambre d'alimentation (2) et se déplace jusqu'à la chambre de filtration (3) en passant à travers l'élément de filtration (5), et
- lorsque les valves V1, V2 et V3 sont ouvertes, la chambre de drainage (4) aspire le fluide de la chambre de filtration (3), qui passe à travers l'élément de filtration (5) et, à travers les pales (7), passe à travers le tube (6) pour se déplacer jusqu'à la chambre de drainage (4), activant le rotor (10) et faisant que les pales (7) balayent la surface interne de l'élément de filtration (5)
le filtre étant **caractérisé en ce que** le disque de sortie (9) comprend des perforations jointes à des buses (18) qui sont radialement distribuées et dirigées vers la surface d'ailettes du rotor (10).

2. Filtre auto-nettoyant selon la revendication 1, **caractérisé en ce que** la brosse nettoyante comprend trois pales (7) distribuées radialement avec une séparation de 120 degrés.

3. Filtre auto-nettoyant selon la revendication 1, **caractérisé en ce que** la longueur totale des pales (7) est supérieure à la longueur du tube (6), les pales (7) se chevauchant légèrement, de sorte qu'il est assuré qu'elles accèdent à la surface entière de l'élément de filtration (5).

4. Filtre auto-nettoyant selon l'une quelconque des revendications 1 ou 2, **caractérisé en ce qu'**entre le disque de sortie (9) et le rotor (10), la chambre de drainage (4) est bloquée par un disque avec des perforations jointes aux buses (18) dirigées vers les ailettes du rotor (10) à travers lesquelles le fluide est forcé à se déplacer.
